# EUROPÄISCHE PATENTSCHRIFT

(11) **EP 1 973 084 B1**
(45) Veröffentlichungstag und Bekanntmachung des Hinweises auf die Patenterteilung: **31.03.2010**
(21) Anmeldenummer: 08002622.2
(22) Anmeldetag: 13.02.2008
(51) Int. Cl.: G08B 13/196

(54) **Überwachungssystem**
Monitoring system
Système de surveillance

(30) Priorität: 19.03.2007 DE 102007013657
(43) Veröffentlichungstag der Anmeldung: 24.09.2008
(73) Patentinhaber: Salewski, Michael, 31162 Bad Salzdetfurth (DE)
(72) Erfinder: Salewski, Michael, 31162 Bad Salzdetfurth (DE)
(74) Vertreter: Plöger, Jan Manfred

(56) Entgegenhaltungen:
- EP-A- 0 364 921
- FR-A- 2 637 554
- US-A- 4 768 090

## Beschreibung

Die vorliegende Erfindung betrifft ein Überwachungssystem gemäß dem Oberbegriff von Anspruch 1.

Im Stand der Technik sind hinreichend Beispiele für Überwachungs- bzw. Sicherheitssysteme bekannt, bei denen mittels einer Kamera ein bestimmter Ort optisch aufgenommen bzw. erfasst wird und davon entfernt das von der Kamera aufgenommene Bild an einer Anzeigevorrichtung bzw. einem Monitor von Bedienpersonal unmittelbar und/oder nach einer Zwischenspeicherung beobachtet wird. Derartige Systeme sind sowohl bei einer Innenraumüberwachung, beispielsweise in Geschäftsräumen, Kaufhäusern, Lagerhallen, Parkhäusern und/oder Bahnhöfen und Flughäfen, als auch bei einer Außenraum- bzw. Perimeterüberwachung einsetzbar, beispielsweise bei einer Grundstücks- oder Zaunüberwachung, Stadtüberwachung und/oder in Stadien.

Die bei den Überwachungssystemen verwendeten Kameras können entweder unbeweglich und fest montiert sein oder sie können ebenfalls an ihrer Montageposition dreh- und verschwenkbar sein. Mittels derartiger manuell von Bedienpersonal steuerbaren oder automatisch gesteuerten Kameras können jeweils größere Sichtfelder des abzusichernden Überwachungsgebietes eingesehen werden.

Weiterhin sind auch Video-Überwachungssysteme bekannt, bei denen die Kamera an einem Schlitten oder Wagen angebracht ist, der entlang einer fest montierten Schiene bewegt wird. Der Schlitten weist hierzu einen üblicherweise elektrisch angetriebenen Motor auf, um so die Kamera zu dem gewünschten Einsatz- und Beobachtungsort zu befördern. Die elektrische Leistung für den Antrieb des Schlittens wird über Schleifkontakte zur Verfügung gestellt, die an und/oder in der Nähe der Schiene angeordnet sind und mit denen ein oder mehrere Stromabnehmer des Schlittens in Kontakt stehen.

Die Stromabnehmer sind federnd ausgebildet, um Ausgleichsbewegungen des Schlittens bei der Fortbewegung entlang der Schiene unbeschädigt ausgleichen zu können. Hiermit einher geht aber auch die Möglichkeit, dass der Stromabnehmer zumindest kurzzeitig den Kontakt zu dem Schleifkontakt verliert und somit die Zuverlässigkeit der Stromversorgung nicht stets gewährleistet ist.

Auch ist die maximale Fahrgeschwindigkeit derartiger schienengebundener Kameraschlitten eingeschränkt, was insbesondere bei einer Außenraumüberwachung mit größeren Entfernungen nur zu einer trägen und zeitverzögerten Einsicht in das zu überwachende Gebiet führt.

Aus der DE 10 2005 026 652 A1 ist ein gattungsgemäßes Überwachungssystem bekannt, bei dem die Rohrkapsel über eine Führungsnut so in der in der Führung angeordnet ist, dass ein Drehen der Rohrkapsel um ihre Längsachse unterdrückt wird. Nachteilig hier ist der hohe Fertigungsaufwand für die Führung, die zudem aufwändig zu montieren ist.

Aus der US 4,777,527 ist ein Überwachungssystem bekannt, bei dem die Rohrkapsel von Schienen geführt wird, die gleichzeitig zur Übertragung elektrischer Energie dienen. Auch dieses System weist die oben genannten Nachteile auf.

Aus der DE 24 32 387 B2 ist eine Rohrpostanlage bekannt, die jedoch nicht zur Verwendung als Überwachungssystem ausgebildet ist.

Vor diesem Hintergrund ist es die Aufgabe der vorliegenden Erfindung, ein Überwachungssystem bereitzustellen, das einfach herzustellen und zu montieren ist.

Diese Aufgabe wird durch ein Überwachungssystem mit den Merkmalen gemäß Anspruch 1 gelöst.

Bei einem Überwachungssystem der eingangs beschriebenen Art ist erfindungsgemäß vorgesehen, dass die Führung ein zumindest teilweise optisch transparentes und an seinen Enden luftdicht verschließbares Führungsrohr ist, das mit mehreren von der Steuereinrichtung ansteuerbaren Ventilen versehen ist, um Druckluft in das Führungsrohr einzuführen und/oder diesem zu entnehmen, und die Kamera an einem Träger angeordnet ist, der innerhalb des Führungsrohres vorgesehen und derart eingerichtet ist, um mittels Druckunterschieden auf beiden Seiten des Trägers innerhalb des Führungsrohres bewegt zu werden.

Die wesentliche Idee der Erfindung ist, dass an dem Träger selber kein Antriebsmotor erforderlich ist und somit die Arbeitsleistung entfällt, um die Masse des Antriebs zu beschleunigen oder abzubremsen. Der Antrieb erfolgt erfindungsgemäß pneumatisch durch die einstellbaren Druckunterschiede in dem Führungsrohr. Der Träger wird mittels eines Luftpolsters durch das Führungsrohr getrieben, wodurch auch Rollreibungswiderstände mit einer Schiene entfallen. Hierdurch ist eine deutlich höhere Geschwindigkeit für die Fortbewegung des Trägers und damit auch der darin montierten Kamera möglich.

In vorteilhafter Weise kann das Führungsrohr aus Glas oder aus Kunststoff hergestellt sein. Der Werkstoff Glas weist hierbei die besseren optischen Eigenschaften auf, während ein Kunststoffrohr leichter und einfacher zu installieren ist.

Um das erfindungsgemäße Überwachungssystem an unterschiedliche Einsatzorte und an verschiedene Einsatzaufgaben anpassen zu können, ist in vorteilhafter Weise vorgesehen, dass das Führungsrohr bereichsweise bogenförmig verläuft.

In vorteilhafter Weise bildet das Führungsrohr einen geschlossenen Umlauf für den Träger. Das Führungsrohr weist in diesem Fall keinen definierten Anfang bzw. kein definiertes Ende auf und ermöglicht somit eine wiederholte Überwachung entlang eines Rundkurses, beispielsweise in Stadien oder entlang einer Rennstrecke.

Bei einem bevorzugten Ausführungsbeispiel des erfindungsgemäßen Überwachungssystems ist das Führungsrohr an seinen Enden mit den Ventilen versehen.

Zusätzlich können mehrere weitere Ventile entlang des Führungsrohres vorgesehen sein, die insbesondere bei in sich geschlossenen Führungsrohren eine zuverlässige Einstellung des Druckes in Teilbereichen ermöglichen und/oder bei längeren bzw. ausgedehnten Führungsrohren die vorhandenen Endventile unterstützen können.

Um eine Begrenzung des Innenvolumens des Führungsrohres vorzunehmen, damit eine präzise Ansteuerung bestimmter Teilbereiche möglich ist, ist in dem Führungsrohr zumindest ein verschieblicher Verschluss vorgesehen.

Um auch komplexere Strukturen und/oder ausgedehnte Flächen überwachen zu können, weist bei einem bevorzugten Überwachungssystem das Führungsrohr zumindest eine Weiche auf.

Zur Optimierung des pneumatischen Antriebs ist die Querschnittsform des Trägers zumindest bereichsweise im Wesentlichen komplementär zur Querschnittsform des Führungsrohres. Hierbei ist ein Abstand einer Lücke zwischen dem Träger und der Innenwand des Führungsrohres derart bemessen, dass sich in der Lücke zwar ein Luftpolster bildet, aber kein bedeutender Druckausgleich durch diese Lücke stattfindet.

Zur Ausbalancierung des Trägers ist beim erfindungsgemäßen Überwachungssystem an dem Träger ein Gewicht vorgesehen, dass den Träger aufgrund der Schwerkraft ausrichtet.

Zusätzlich können an dem Führungsrohr voneinander beabstandet eine Vielzahl von ersten Magneten angeordnet sein, die mit einem oder mehreren zweiten Magneten an dem Träger wechselwirken können. Auch hierdurch kann aufgrund der magnetischen Wechselwirkung eine Ausrichtung des Trägers vorgenommen werden. Die ersten und/oder zweiten Magnete können sowohl Permanentmagnete oder schaltbare Elektromagnete sein.

Bevorzugt ist bei einem erfindungsgemäßen Überwachungssystem die Kamera in Bezug auf das Führungsrohr verschwenkbar. Dies kann entweder durch eine Drehung des Trägers oder durch geeignete Schrittmotoren erfolgen, die die Kamera in Bezug auf den in dem Führungsrohr ausgerichteten Träger verschwenken.

In vorteilhafter Weise ist bei einem erfindungsgemäßen Überwachungssystem als Kamera eine Farb-, Schwarz/Weiß-, Nachtsicht-, Wärmebild-, Highspeed-, HDTV- und/oder Fotokamera vorgesehen. Die Art der Kamera kann entsprechend dem Einsatzgebiet und der Sicherheitsaufgabe geeignet ausgewählt werden.

In vorteilhafter Weise ist zum Übertragen der erfassten Bilddaten von der Kamera an die Steuereinrichtung eine Funkverbindung vorgesehen. Alternativ dazu können zum Übertragen der erfassten Bilddaten von der Kamera an die Steuereinrichtung codierte Lichtsignale vorgesehen sein. Hierzu kann beispielsweise Laserlicht innerhalb des Führungsrohres ausgesendet werden. Auch ist eine Signalübertragung über Lichtwellenleiter möglich, die sich bei einer Bewegung des Trägers von einer Spule abrollen bzw. auf diese aufrollen.

Um eine mögliche Verminderung der Bildqualität durch optische Störstellen an dem Führungsrohr, beispielsweise Kratzer, Verunreinigungen oder Kondensat, zu vermeiden, ist an der Außenseite des Führungsrohres ein Schlitten mit einer zusätzlichen Kamera angeordnet, der in Wechselwirkung mit dem Träger dem Führungsrohr entlang beweglich ist, so dass der Schlitten gemeinsam mit dem Träger bewegt wird. Diese Wechselwirkung kann beispielsweise durch geeignete Magnete bereitgestellt werden.

Bevorzugt weist das erfindungsgemäße Überwachungssystem an dem Führungsrohr und/oder an dem Träger angeordnete Positionsbestimmungssensoren auf, die derart eingerichtet sind, um die Position des Trägers und dem Führungsrohr zu bestimmen und die bestimmten Positionsdaten an die Steuereinrichtung weiterzuleiten. Anhand der bestimmten Position kann die Steuerung des Überwachungssystems verbessert und präzisiert werden.

Nachfolgend wird die vorliegende Erfindung anhand der detaillierten Beschreibung der Ausführungsformen unter Bezug auf die beigefügten Figuren beispielhaft näher erläutert, in denen:
- Figur 1: schematisch skizziert ein erfindungsgemäßes Überwachungssystem zeigt,
- Figur 2: einen Abschnitt eines Führungsrohres mit einem darin befindlichen ersten Ausführungsbeispiel eines erfindungsgemäßen Trägers zeigt,
- Figur 3: ein zweites Ausführungsbeispiel eines erfindungsgemäßen Trägers zeigt,
- Figur 4: ein drittes Ausführungsbeispiel eines erfindungsgemäßen Trägers zeigt,
- Figur 5: ein viertes Ausführungsbeispiel eines erfindungsgemäßen Trägers zeigt,
- Figur 6: einen gekrümmten Abschnitt eines erfindungsgemäßen Führungsrohres zeigt,
- Figur 7: eine Weiche in einem Führungsrohr zeigt,
- Figur 8: ein Ausführungsbeispiel eines in sich geschlossenen Führungsrohres zeigt, und
- Figuren 9 a - c: einen erfindungsgemäßen Verschluss des Führungsrohres in einer perspektivischen Darstellung, einer Draufsicht bzw. einer Vorderansicht zeigen.

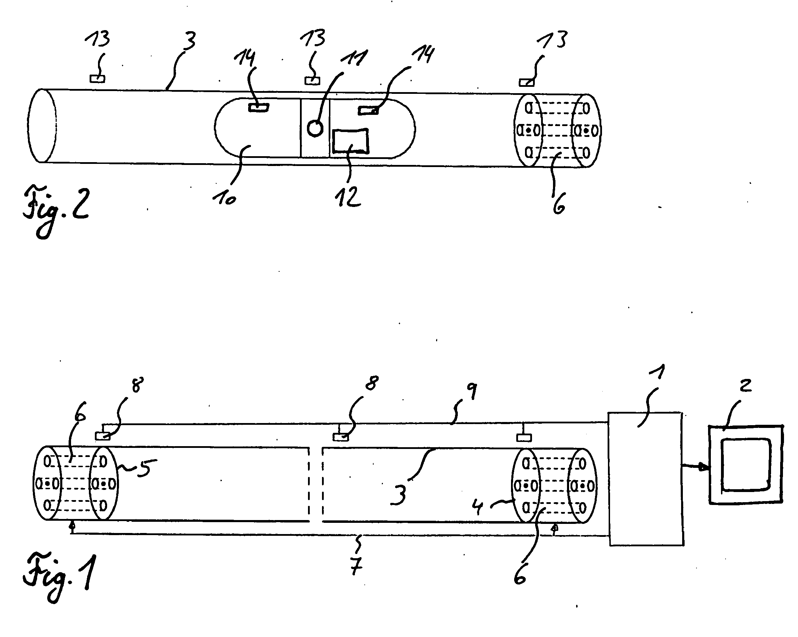

In Figur 1 ist schematisch ein erfindungsgemäßes Überwachungssystem skizziert. Das Überwachungssystem weist eine zentrale Steuereinrichtung 1 auf, die mit einer Anzeigevorrichtung 2 verbunden ist. Auf dem Monitor 2 können von einer an einem Träger angeordneten Kamera (siehe hierzu Figuren 2 bis 5) aufgenommene Bilddaten einem Bediener des Überwachungssystems angezeigt werden. Hierbei können sowohl aktuelle Bilddaten und/oder Bilddaten aus einem Zwischenspeicher (nicht dargestellt) wiedergegeben werden.

Die zentrale Steuereinrichtung 1 kann durch Bedienpersonal mit geeigneten Eingabevorrichtungen, beispielsweise über Tastatur, Joystick und/oder Joypad, bedient werden. Die Steuerbefehle können hierbei individuell in Abhängigkeit der Art der Eingabevorrichtung und der einzelnen Komponenten des Überwachungssystems definiert werden. Alternativ und/oder zusätzlich ist eine automatische Steuerung möglich, die auf ein vorbestimmtes Ereignis aktiviert wird. Das Ereignis kann beispielsweise ein von einer Einbruchmeldezentrale, Zutrittskontrolleinrichtung oder einer Brandmeldeanlage gesendeter Alarm sein.

Das Überwachungssystem weist ferner ein optisch transparentes Führungsrohr 3 auf, das aus Glas oder Acryl hergestellt sein kann. Das Führungsrohr 3 kann hierbei vollständig transparent oder teilweise eingetönt und/oder undurchsichtig sein. Der Durchmesser des Führungsrohres 3 kann individuell je nach Einsatzort und/oder Sicherheitsaufgabe festgelegt werden. Das vollständige Führungsrohr 3 ist vorteilhaft aus einzelnen Rohrabschnitten geeigneter Längen zusammengesetzt, um eine einfache Herstellung der Rohrabschnitte und einen sicheren Transport vor der Installation des Überwachungssystems zu ermöglichen. Die Rohrabschnitte werden bei der Montage zusammengesetzt und mit einem Kleber geeignet gefügt, so dass eine luftdichte Verbindung zwischen den einzelnen Rohrabschnitten erhalten wird. Die Übergänge zwischen zwei entsprechenden Rohrabschnitten betragen nur wenige Millimeter, so dass durch die abweichenden optischen Eigenschaften an der Klebstelle kaum Bild- und Informationsverlust entsteht. Das Führungsrohr 3 kann mit Halteelementen an einer Wand, Decke, Zaun oder an Stützen montiert werden.

Das Führungsrohr 3 ist an seinen beiden Enden 4, 5 luftdicht verschließbar. An diesen Enden 4, 5 befinden sich jeweils mehrere Ventile 6, um Druckluft in das Führungsrohr 3 einströmen oder aus diesem ausströmen zu lassen. Die Ventile 6 zum Einlassen der Druckluft sind hierbei an einer geeigneten Druckluftquelle (nicht dargestellt) angeschlossen. Zur Unterstützung des Ausströmens können die Ventile 6 zum Ablassen der Luft aus dem Führungsrohr mit einem Unterdruck verbunden sein. Alternativ werden die Ventile 6 zum Ablassen lediglich zum Umgebungsdruck hin geöffnet.

Die Ventile 6 können entweder als reine Einlass- bzw. Auslassventile oder alternativ als Kombinationsventile ausgebildet sein, durch die Druckluft sowohl einströmen als auch ausströmen kann. Die Ventile 6 sind über eine Signalleitung 7 mit der zentralen Steuereinrichtung 1 verbunden, die somit die Stellung der Ventile 6, beispielsweise über SPS oder PC, ansteuern kann. Durch eine entsprechende Steuerung der Ventile 6 ist eine stufenlose Geschwindigkeitsregelung des Trägers möglich.

Weiterhin sind zueinander beabstandet an dem Führungsrohr 3 Positionssensoren 8 angeordnet, die über eine Signalleitung 9 ebenfalls mit der zentralen Steuereinrichtung 1 verbunden sind. Über die Positionsbestimmungssensoren 8 kann die Position des Trägers in dem Führungsrohr 3 bestimmt werden. Dies kann beispielsweise dadurch erfolgen, dass die Positionsbestimmungssensoren 8 Reedkontakte sind, die durch einen am Träger angeordneten Magneten beim Vorbeifahren ausgelöst werden. Alternativ können an dem Führungsrohr 3 Magnete angeordnet sein, die einen Reedkontakt am Träger auslösen. Über Auszählen der Auslösungen und in Kenntnis der Anfangsposition des Trägers kann ebenfalls die Position bestimmt werden. In Abhängigkeit der bestimmten Position kann die Steuereinrichtung 1 anschließend die Ventile 6 ansteuern, um den Träger an den gewünschten Einsatzort zu befördern. Ferner sind weitere Erfassungsmöglichkeiten für Positionierungsdaten denkbar, beispielsweise kann die Erfassung über passive oder aktive RFID-Techniken oder über Barcodeaufkleber an dem Führungsrohr 3 möglich, die von einen am Träger mitgeführten Leser erfasst und decodiert werden.

An den Enden 4, 5 des Führungsrohres 3 kann jeweils eine elastisches Element (nicht dargestellt), beispielsweise eine Spiralfeder, vorgesehen sein, gegen die der Träger 10 ungebremst fahren kann, ohne dabei beschädigt zu werden. Hierbei kann ein Notaus ausgelöst werden, um einen weiteren Druckaufbau innerhalb des Führungsrohres 3 zu verhindern. Schließlich dient die Feder auch vor einem unerwünschten Verschluss der Öffnungen der Ventile 6.

In Figur 2 ist schematisch ein Abschnitt des Führungsrohres 3 mit einem darin befindlichen Träger 10 dargestellt. Der Träger 10 weist eine symmetrische und im Wesentlichen torpedoförmige Gestaltung auf, bei der die beiden Endbereiche des Trägers jeweils in etwa eine Halbkugel bilden. In dem zwischen den Halbkugeln befindlichen mittleren Bereich des Trägers 10 ist eine Kamera 11 angebracht. Die Kamera 11 kann zusammen mit dem Träger 10 verschwenkt werden, beispielsweise über eine geeignete Verstellmechanik unter Ausnutzung eines Druckluftunterschiedes auf beiden Seiten des Träges 10. Alternativ besteht eine weitere Möglichkeit der Verschwenkung durch Servo- oder/und Mini- oder Schrittmotoren, die über eine Datensteuerung von der zentralen Steuereinheit 1 entsprechend bedient werden können.

Zur Ausbalancierung des Trägers 10 in dem Führungsrohr 3 kann in dem Träger 10 ein entsprechendes Gewicht 12 vorgesehen sein, so dass sich der Träger 10 aufgrund der mit diesem Gewicht 12 wechselwirkenden Schwerkraft in dem Führungsrohr 3 ausrichtet. Als Gewicht können beispielsweise Akkumulatoren für die Kamera 11 verwendet werden. Ferner ist der Träger 10 mit einer Sende/Empfangseinheit ausgerüstet, über die zum einen die Bilddaten an die zentrale Steuereinrichtung 1 gesendet und zum anderen Befehlsdaten zur Steuerung der Kamera 11 empfangen werden können.

An der Außenseite des Führungsrohres 3 sind zueinander beabstandet mehrere erste Magnete 13 angeordnet. An dem Träger 10 befinden sich zweite Magnete 14. Aufgrund einer magnetischen Wechselwirkung zwischen den zweiten Magneten 14 des Trägers 10 und den ersten Magneten 13 an dem Führungsrohr 3 kann der Träger 10 innerhalb des Führungsrohres 3 ausgerichtet werden. Sowohl die ersten Magnete 13 als auch die zweiten Magnete 14 können Permanentmagnete sein. Bevorzugt sind die ersten Magnete 13 ansteuerbare Elektromagnete, die in mehreren zueinander parallel angeordneten Linien an der Außenseite des Führungsrohres 3 angeordnet sind, und durch eine geeignete Ansteuerung und Polung kann der Träger 10 innerhalb des Führungsrohres 3 aufgrund der magnetischen Anziehungs- und Abstoßungskräfte zwischen den zweiten Magneten 14 und den ersten Magneten 13 verschwenkt werden.

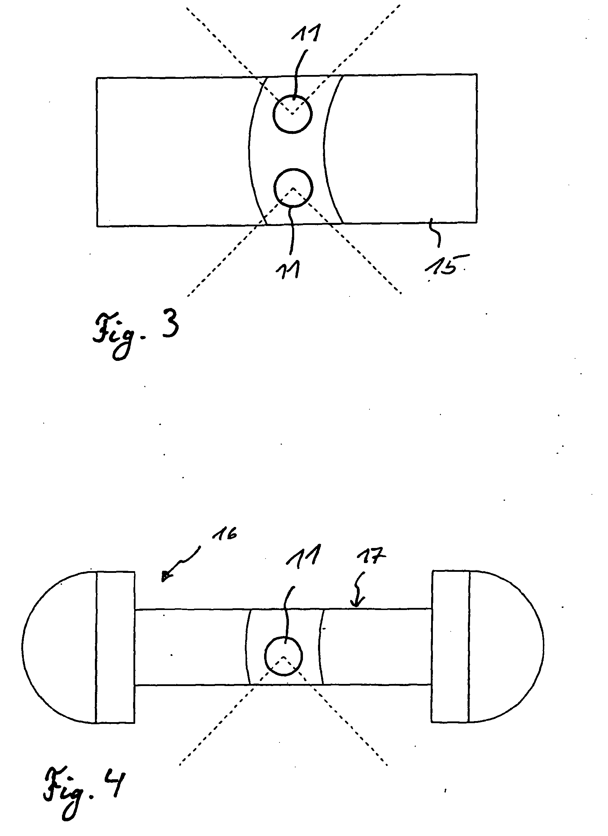

Anhand der Figuren 3 bis 5 werden weitere Ausführungsbeispiele für einen erfindungsgemäßen Träger vorgestellt. Figur 3 zeigt einen Träger 15, der im Unterschied zum Träger 10 aus der Figur 2 abgeflachte Enden aufweist. Durch die Auswahl der Form der Endbereiche kann die maximale Geschwindigkeit für die Bewegung des Trägers 10 bzw. 15 in dem Überwachungssystem mitgesteuert werden. Der Träger 15 weist ferner zwei Kameras 11 auf, die mit einem Winkel zueinander ausgerichtet sind, so dass die beiden Kameras 11 des Trägers 15 zusammen ein größeres Sichtfeld erfassen.

In Figur 4 ist ein drittes Ausführungsbeispiel eines Trägers 16 dargestellt. Der Träger 16 hat ähnlich wie der Träger 10 abgerundete Endbereiche. Im Unterschied zu den vorstehend beschriebenen Trägern 10 und 15 weist der Träger 16 ein im Durchmesser verringertes Mittelstück 17 auf, in dem sich die Kamera 11 befindet. Aufgrund des reduzierten Durchmessers im Mittelstück 17 kann der Träger 16 zuverlässiger durch gekrümmte bzw. bogenförmig verlaufende Abschnitte des Führungsrohres hindurchbewegt werden, ohne hierbei in dem Führungsrohr 3 zu verkanten. Alternativ kann ein Träger für Kurven- und/oder Weichenfahrten mit Gelenken, beispielsweise Ziehharmonika- bzw. Faltenbalggelenken, ausgestattet werden

Die Bildübertragung von der Kamera 11 zu der zentralen Steuereinrichtung 1 (Figur 1) kann über eine Funkverbindung, über einen Laser oder über Licht erfolgen. Die Übertragung über eine drahtlose Funkverbindung ist technisch am einfachsten zu realisieren, sie weist jedoch den Nachteil auf, dass eine drahtlose Funkverbindung nicht unbedingt abhörsicher ist und somit das Überwachungssystem nicht zuverlässig gegen eine Manipulation bzw. Spionage abgesichert ist. Alternativ kann an den Trägern 10, 15 und 16 eine Laserdiode in zumindest einen der jeweils zwei Endbereiche vorgesehen sein, die codierte Lichtsignale ausstrahlt, die entlang einem geradlinigen Führungsrohr 3 zu einem Empfänger am luftdicht verschlossenen Ende laufen können. Von diesem Empfänger werden sie an die zentrale Steuereinrichtung 1 weitergeleitet. Bei dieser Übertragung der erfassten Bilddaten müssen allerdings an Weichen und gekrümmten Führungsrohrabschnitten entsprechende Umlenkeinrichtungen bzw. Spiegel angeordnet sein.

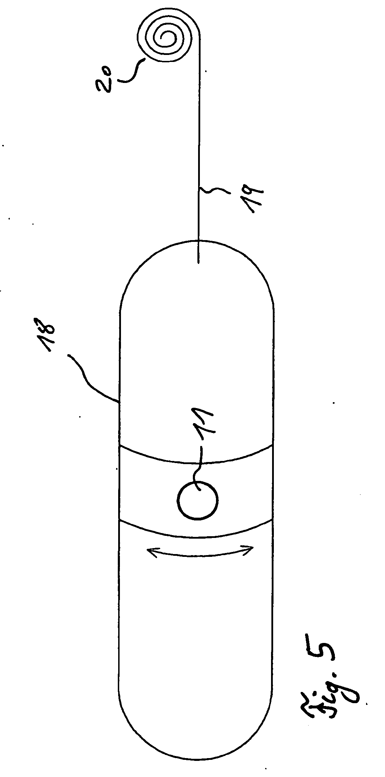

Eine weitere mögliche Bildübertragung wird anhand der Figur 5 und dem dort vorgestellten Träger 18 erläutert. An einem Endbereich des Trägers 18 befindet sich eine Anschlusskupplung für einen Lichtwellenleiter 19, der auf einer entsprechenden Spule 20 aufgewickelt ist. Die Spule 20 befindet sich an einem Ende des Führungsrohres 3 (hier nicht gezeigt) und der Lichtwellenleiter wickelt sich von der Spule 20 bei einer Bewegung des Trägers 18 ab bzw. auf. Die Kamera 11 in dem Träger 18 ist in Bezug auf den Träger 18 verschwenkbar, wie es durch den Doppelpfeil angedeutet wird.

Bei allen vorstehend beschriebenen Trägern 10, 15, 16 und 18 sind dort neben der jeweiligen Kamera 11 weiter Zubehörkomponenten angebracht. Diese Komponenten sind unter anderem die Stromversorgung, beispielsweise eine Batterie oder ein Akkumulator, und eine Vorrichtung, um die Bilddaten der Kamera 11 an die zentrale Steuerungseinrichtung 1 weiterzuleiten, beispielsweise eine Sende/Empfangseinheit oder eine Wandlereinheit, um elektronische Signale in Lichtsignale und umgekehrt umzuwandeln. Ferner kann eine weitere Lichtquelle vorgesehen werden, um das einzusehende Überwachungsgebiet auszuleuchten. Schließlich können weitere Sensoren, beispielsweise Positionsbestimmungs- Druck-, Temperatur- und/oder Luftfeuchtigkeitssensoren und entsprechende Sensorauswerteeinrichtungen vorgesehen werden.

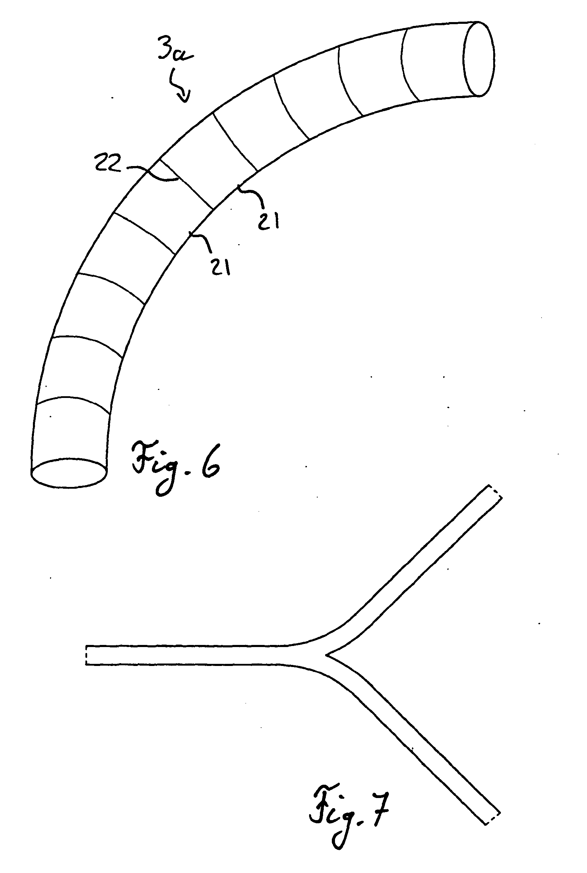

In der Figur 6 ist ein gekrümmter Abschnitt 3a des Führungsrohres dargestellt. Der gekrümmte Abschnitt 3a kann je nach Anforderung aus mehreren Einzelstücken 21 eines geraden Rohres bestehen, die wie es in der Figur 6 dargestellt ist, aneinander gefügt werden. Die Einzelstücke 21 werden bevorzugt miteinander verklebt, so dass an der Verbindungsstelle 22 eine druckdichte Verbindung zwischen den beiden Einzelstücken 21 ermöglicht ist. Alternativ kann ein gekrümmter Abschnitt auch aus einem einzigen gebogenen Rohrstück bestehen. Der Radius der Krümmung wird in seiner Größe so angepasst, dass ein Träger 10, 15, 16, 18 mit der jeweils vorgesehenen Maximalgeschwindigkeit den gekrümmten Abschnitt 3a zuverlässig und komplikationslos durchfahren kann.

In Figur 7 ist schematisch eine Weiche 23 für das Führungsrohr 3 des Überwachungssystems dargestellt. In der Draufsicht weist die Weiche 23 eine Y-Form auf. Die Weiche 23 funktioniert durch die Schließung der Ventile an dem nicht zu durchfahrenden Bereich, so dass sich dort ein entsprechender Gegendruck aufbaut. Dem Träger bleibt nur die Möglichkeit, sich in Richtung des Teilstückes der Weiche 23 zu bewegen, an dessen Ende sich ein geöffnetes Ventil befindet. Anhand der vorstehend beschriebenen Positionsbestimmungssensoren 8 (aus Figur 1) kann ein korrektes Durchfahren der Weiche 23 von der zentralen Steuereinrichtung 1 gesteuert und überprüft werden.

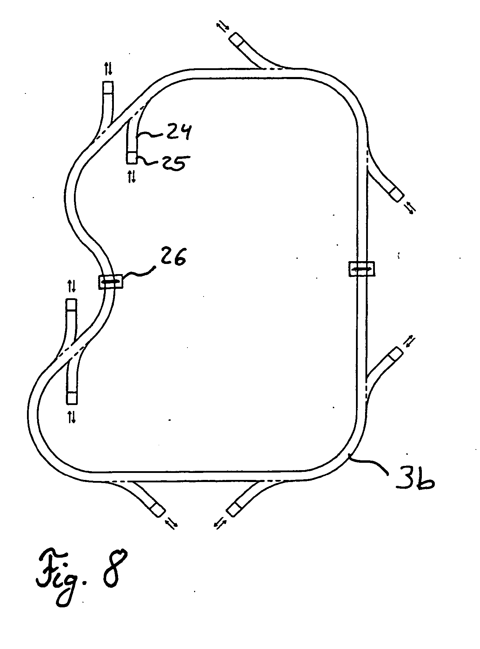

In der Figur 8 ist ein Ausführungsbeispiel eines in sich geschlossenen Führungsrohres 3b dargestellt, in dem der erfindungsgemäße Träger (siehe Figuren 2 bis 4) in eine Umlaufrichtung wiederholt umlaufend bewegt werden kann. Das Führungsrohr 3b ist folglich als ein Rundkurs ohne definierten Anfang und ohne definiertes Ende konzipiert. Um innerhalb des Führungsrohres den Luftdruck einzustellen, sind mehrere Rohrstücke 24 an dem Führungsrohr 3b angeordnet, deren zweites Ende luftdicht verschlossen ist und jeweils ein oder mehrere Ventile 25 aufweist, die im Wesentlichen den Ventilen 6 (Figuren 1 oder 2) entsprechen. Die Rohrstücke 24 sind nicht rechtwinklig sondern in jeweils einem kleineren Winkel an dem entsprechenden Bereich des Führungsrohres 3b befestigt, um den zugeführten und/oder entnommenen Volumenstrom eine Strömungsrichtung mitzugeben.

Um die jeweils anzusteuernden Teilbereiche des Führungsrohres 3b abzukürzen, so dass eine zuverlässige und prompte Drucksteuerung erfolgen kann, ist in dem Führungsrohr 3b zusätzlich ein Schott oder Verschluss 26 angeordnet, welcher mittels einer elektronischen und/oder pneumatischen Ansteuerung durch die Steuereinrichtung (1 in Figur 1) das Führungsrohr luftdicht verschließt. Mittels einer zumindest teilweisen Öffnung ist ein Druckausgleich in dem Führungsrohr 3b vor und hinter dem Verschluss 26 möglich. Je nach Bedarf kann auf diese Weise auch ein Teilbereich des Führungsrohres 3b abgetrennt werden, beispielsweise um aus wirtschaftlichen Erwägungen zeitweise nur einen bestimmten Anteil des Führungsrohres 3b zu betreiben und/oder um einen Teilbereich abzutrennen, in dem eine Leckage aufgetreten ist. Ist die Durchfahrt des Trägers durch diesen Teilbereich wieder erforderlich oder möglich, kann der entsprechende Verschluss erneut geöffnet werden.

Bei einem derartigen Rundkurs der Figur 8 ist eine Datenübertragung mittels eines Lichtwellenleiters, der mit Bezug auf Figur 5 beschrieben wurde, nicht möglich. Alle anderen, angesprochenen Kommunikationswege zwischen der zentralen Steuereinrichtung und dem Träger sind aber realisierbar. Der Einsatz eines in sich geschlossenen Führungsrohres 3b ist beispielsweise für eine Stadionüberwachung und/oder entlang einer Rennstrecke denkbar. Bei einer geeigneten, kleinen Dimensionierung ist auch ein Einbau unter einer Karosserie eines Kraftfahrzeuges möglich, um vor dem Start die Unterseite des Fahrzeuges überprüfen zu können.

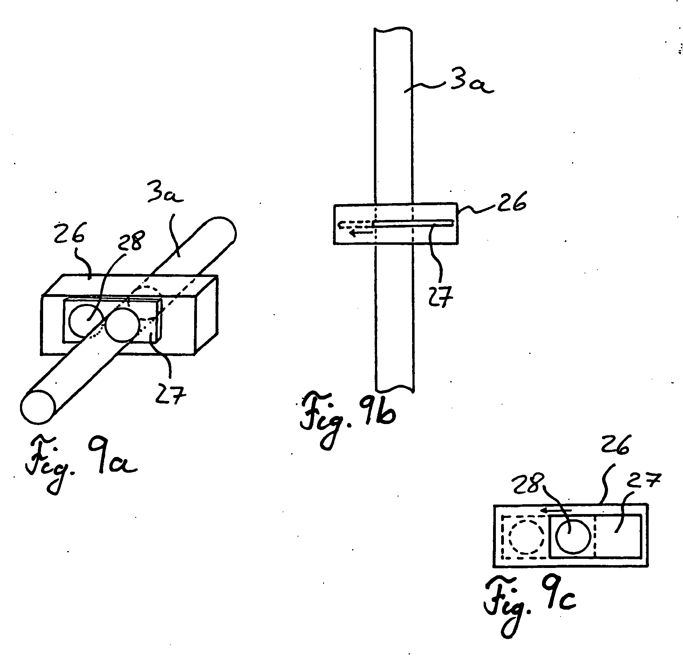

Unter Bezug auf die Figuren 9a bis c wird der Verschluss 26 aus Figur 8 vergrößert dargestellt. Hierbei zeigt Figur ein 9a eine perspektivische Darstellung, Figur 9b eine Draufsicht und Figur 9c eine Vorderansicht des Verschlusses 26. Der Verschluss 26 weist eine verschiebliche Platte 27 auf, die auf einer Seite einer zur Verschiebungsrichtung senkrechten Mittellinie eine Öffnung 28 aufweist, die in Form und Größe dem Innenquerschnitt des Führungsrohres 3b entspricht. Durch eine Verschiebung der Platte 27 kann entweder die Position der Öffnung 28 in Übereinstimmung mit dem Führungsrohr 3b gebracht oder das Führungsrohr 3b luftdicht verschlossen werden.

Das Überwachungssystem kann sowohl im Innen- als auch im Außenbereich eingesetzt werden. Um auch bei starker Kälte und/oder bei großer Hitze eine Beeinträchtigung der Funktionsweise oder gar einen Ausfall der eingesetzten Elektroniken zu vermeiden, kann die Temperatur der Luft in dem Führungsrohr 3, 3a und/oder 3b bzw. der zugeführten Druckluft geregelt werden.

## Patentansprüche

1. Überwachungssystem mit
(a) zumindest einer Kamera (11), die entlang einer Führung beweglich ist und Bilddaten erfasst,
(b) einer Steuereinrichtung (1) und
(c) einer Anzeigevorrichtung (2) für die Bilddaten,
(d) wobei die Führung ein zumindest teilweise optisch transparentes und luftdicht verschließbares Führungsrohr (3, 3a, 3b) ist, das mit mehreren von der Steuereinrichtung (1) ansteuerbaren Ventilen (6, 25) versehen ist, um Druckluft in das Führungsrohr (3, 3a, 3b) einzuführen und/oder diesem zu entnehmen, und
(e) die Kamera (11) an einem Träger (10, 15, 16, 18) angeordnet ist, der innerhalb des Führungsrohres (3, 3a, 3b) vorgesehen und derart eingerichtet ist, um mittels Druckunterschieden auf beiden Seiten des Trägers (10, 15, 16, 18) innerhalb des Führungsrohres (3, 3a, 3b) bewegt zu werden,
**dadurch gekennzeichnet, dass**
(f) an dem Träger (10) ein Gewicht (12) vorgesehen ist, das den Träger aufgrund der Schwerkraft ausrichtet.

2. Überwachungssystem nach Anspruch 1, **dadurch gekennzeichnet, dass** das Führungsrohr (3, 3a, 3b) aus Glas oder aus Kunststoff ist.

3. Überwachungssystem nach einem der vorstehenden Ansprüche, **dadurch gekennzeichnet, dass** das Führungsrohr (3a, 3b) bereichsweise bogenförmig verläuft.

4. Überwachungssystem nach einem der vorstehenden Ansprüche, **dadurch gekennzeichnet, dass** das Führungsrohr (3b) einen geschlossenen Umlauf für den Träger (10, 15, 16, 18) bildet.

5. Überwachungssystem nach einem der Ansprüche 1 bis 3, **dadurch gekennzeichnet, dass** das Führungsrohr (3, 3a) an seinen Enden (4, 5) mit den Ventilen (6) versehen ist.

6. Überwachungssystem nach einem der vorstehenden Ansprüche, **dadurch gekennzeichnet, dass** mehrere Ventile (25) an dem Führungsrohr (3b) entlang vorgesehen sind.

7. Überwachungssystem nach einem der vorstehenden Ansprüche, **dadurch gekennzeichnet, dass** in dem Führungsrohr (3b) zumindest ein verschieblicher Verschluss (26) vorgesehen ist.

8. Überwachungssystem nach einem der vorstehenden Ansprüche, **dadurch gekennzeichnet, dass** das Führungsrohr (3) zumindest eine Weiche (23) aufweist.

9. Überwachungssystem nach einem der vorstehenden Ansprüche, **dadurch gekennzeichnet, dass** der Querschnitt des Trägers (10, 15, 16, 18) zumindest bereichsweise im Wesentlichen komplementär zum Querschnitt des Führungsrohres (3, 3a, 3b) ist.

10. Überwachungssystem nach einem der vorstehenden Ansprüche, **dadurch gekennzeichnet, dass** an dem Führungsrohr (3, 3a, 3b) voneinander beabstandet eine Vielzahl von ersten Magneten (13) angeordnet sind, die mit einem oder mehreren zweiten Magneten (14) an dem Träger (10) wechselwirken können.

11. Überwachungssystem nach einem der vorstehenden Ansprüche, **dadurch gekennzeichnet, dass** die Kamera (11) in Bezug auf das Führungsrohr (3, 3a, 3b) verschwenkbar ist.

12. Überwachungssystem nach einem der vorstehenden Ansprüche, **dadurch gekennzeichnet, dass** als Kamera (11) eine Farb-, Schwarz/Weiß-, Nachtsicht-, Wärmebild-, Highspeed-, HDTV- und/oder Fotokamera vorgesehen ist.

13. Überwachungssystem nach einem der vorstehenden Ansprüche, **dadurch gekennzeichnet, dass** zum Übertragen der erfassten Bilddaten von der Kamera (11) an die Steuereinrichtung (1) eine Funkverbindung vorgesehen ist.

14. Überwachungssystem nach einem der vorstehenden Ansprüche, **dadurch gekennzeichnet, dass** zum Übertragen der erfassten Bilddaten von der Kamera (11) an die Steuereinrichtung (1) codierte Lichtsignale vorgesehen sind.

15. Überwachungssystem nach einem der vorstehenden Ansprüche, **dadurch gekennzeichnet, dass** der Außenseite des Führungsrohres (3, 3a, 3b) ein Schlitten mit einer zusätzlichen Kamera (11) angeordnet ist, der in Wechselwirkung mit dem Träger (10, 15, 16, 18) dem Führungsrohr (3, 3a, 3b) entlang beweglich ist.

16. Überwachungssystem nach einem der vorstehenden Ansprüche, **gekennzeichnet durch** an dem Führungsrohr (3, 3a, 3b) und/oder an dem Träger (10) angeordneten Positionsbestimmungssensoren (8), die derart eingerichtet sind, um die Position des Trägers (10) in dem Führungsrohr (3, 3a, 3b) zu bestimmen und die bestimmten Positionsdaten an die Steuereinrichtung (1) weiterzuleiten.

## Claims

1. A surveillance system with
(a) at least one camera (11) that is moveable along a guide rail and captures image data,
(b) a steering unit (1) and
(c) a display apparatus (2) for the image data,
(d) the guide rail being an at least partly optically transparent and an air tight closable guide tube (3, 3a, 3b) that is furnished with several valves (6, 25) which are selectable by the steering unit (1), in order to put compressed air into the guide tube (3, 3a, 3 b) and/or take compressed air out of it, and
(e) the camera (11) being attached to a rack (10, 15, 16, 18), which is provided and arranged within the guide tube (3, 3 a, 3 b) in a way that enables it to be moved within the guide tube (3, 3a, 3b) by use of different pressures on both sides of the rack (10, 15, 16, 18),
**characterised in that**
(f) the rack (10) is provided with a weight (12) that adjusts the rack due to gravity.

2. The surveillance system according to claim 1, **characterised in that** the guide tube (3, 3a, 3b) is made of glass or plastic.

3. The surveillance system according to one of the preceding claims, **characterised in that** the guide tube (3a, 3b) is partly bow-shaped.

4. The surveillance system according to one of the preceding claims, **characterised in that** the guide tube (3b) forms a closed sheathing for the rack (10, 15, 16, 18).

5. The surveillance system according to one of the claims 1-3, **characterised in that** the guide tube (3, 3a) is provided with the valves (6) at its ends (4, 5).

6. The surveillance system according to one of the preceding claims, **characterised in that** several valves (25) are provided along the guide tube (3b).

7. The surveillance system according to one of the preceding claims, **characterised in that** at least one slidable clasp (26) is provided in the guide tube (3b).

8. The surveillance system according to one of the preceding claims, **characterised in that** in the guide tube (3) has at least one switch (23).

9. The surveillance system according to one of the preceding claims, **characterised in that** the cross section of the rack (10, 15, 16, 18) is at least partly essentially complementary to the cross section of the guide tube (3, 3a, 3b).

10. The surveillance system according to one of the preceding claims, **characterised in that**, on the guide tube (3, 3a, 3b), there is a number of magnets (13) at a distance from each other, which can interact with one or more of the second magnets (14) on the rack (10).

11. The surveillance system according to one of the preceding claims, **characterised in that** the camera (11) is pivotable relating to the guide tube (3, 3a, 3b).

12. The surveillance system according to one of the preceding claims, **characterised in that** a colour, black/white, night vision, thermal image, high speed, HDTV and/or photo camera is provided as a camera (11).

13. The surveillance system according to one of the preceding claims, **characterised in that** a radio communication link is provided to transfer the collected image data from the camera (11) to the steering unit (1).

14. The surveillance system according to one of the preceding claims, **characterised in that** encoded light-signals are provided to transfer the collected image data from the camera to the steering unit (1).

15. The surveillance system according to one of the preceding claims, **characterised in that** a carriage with an additional camera (11) is arranged on the outside of the guide tube (3, 3a, 3b) that is movable along the guide tube (3, 3a, 3b) in interaction with the rack (10, 15, 16, 18).

16. The surveillance system according to one of the preceding claims, **characterised by** position-defining sensors (8) that are arranged on the guide tube (3, 3a, 3b) and/or on the rack (10) that are set in a way that they define the position of the rack (10) in the guide tube (3, 3a, 3b) and transfer the defined position data to the steering unit (1).

## Revendications

1. Système de surveillance comprenant
(a) au moins une caméra (11) mobile le long d'un guide et qui saisit des données-images,
(b) un dispositif de commande (1) et
(c) un dispositif d'affichage (2) pour les données-images,
(d) le guidage étant un tube de guidage (3, 3a, 3b) au moins partiellement optiquement transparent et pouvant être fermé de façon étanche à l'air, muni de plusieurs soupapes (6, 25) pilotables par le dispositif de commande (1), pour introduire de l'air comprimé dans le tube de guidage (3, 3a, 3b) et/ou en prélever de celui-ci, et
(e) la caméra (11) est agencée sur un support (10, 15, 16, 18) qui est prévu à l'intérieur du tube de guidage (3, 3a, 3b) et arrangé de sorte à être déplacé au moyen de différences de pression des deux côté du support (10, 15, 16, 18) à l'intérieur du tube de guidage (3, 3a, 3b),
**caractérisé en ce que**
(f) il est prévu sur le support (10) un poids (12) qui oriente le support par gravité.

2. Système de surveillance selon la revendication 1, **caractérisé en ce que** le tube de guidage (3, 3a, 3b) est en verre ou en matière synthétique.

3. Système de surveillance selon l'une des revendications précédentes, **caractérisé en ce que** le tube de guidage (3a, 3b) s'étend localement en forme d'arc.

4. Système de surveillance selon l'une des revendications précédentes, **caractérisé en ce que** le tube de guidage (3b) forme un circuit fermé pour le support (10, 15, 16, 18).

5. Système de surveillance selon l'une des revendications 1 à 3, **caractérisé en ce que** le tube de guidage (3, 3a) est muni des soupapes (6) à ses extrémités (4, 5).

6. Système de surveillance selon l'une des revendications précédentes, **caractérisé en ce que** plusieurs soupapes (25) sont prévues le long du tube de guidage (3b).

7. Système de surveillance selon l'une des revendications précédentes, **caractérisé en ce qu'**au moins un bouchon (26) déplaçable est prévu dans le tube de guidage (3b).

8. Système de surveillance selon l'une des revendications précédentes, **caractérisé en ce que** le tube de guidage (3) présente au moins un aiguillage (23).

9. Système de surveillance selon l'une des revendications précédentes, **caractérisé en ce que** la coupe transversale du support (10, 15, 16, 18) est, au moins localement, sensiblement complémentaire de la coupe transversale du tube de guidage (3, 3a, 3b).

10. Système de surveillance selon l'une des revendications précédentes, **caractérisé en ce que** sur le tube de guidage (3, 3a, 3b) sont agencés plusieurs premiers aimants (13) espacés les uns des autres qui peuvent interagir avec un ou plusieurs deuxièmes aimants sur le support (10).

11. Système de surveillance selon l'une des revendications précédentes, **caractérisé en ce que** la caméra (11) est pivotable par rapport au tube de guidage (3, 3a, 3b).

12. Système de surveillance selon l'une des revendications précédentes, **caractérisé en ce qu'**il est prévu en tant que caméra (11) une caméra couleur, noir et blanc, à vision nocturne, thermique, haute vitesse, TVHD et/ou un appareil photo.

13. Système de surveillance selon l'une des revendications précédentes, **caractérisé en ce qu'**il est prévu une liaison radio pour la transmission des données-images saisies de la caméra (11) au dispositif de commande (1).

14. Système de surveillance selon l'une des revendications précédentes, **caractérisé en ce que** des signaux lumineux codés sont prévus pour la transmission des données-images saisies de la caméra (11) au dispositif de commande (1).

15. Système de surveillance selon l'une des revendications précédentes, **caractérisé en ce qu'**est agencé à la face extérieure du tube de guidage (3, 3a, 3b) un chariot ayant une caméra (11) supplémentaire, lequel est mobile en interaction avec le support (10, 15, 16, 18) le long du tube de guidage (3, 3a, 3b).

16. Système de surveillance selon l'une des revendications précédentes, **caractérisé par** des capteurs de détermination de position (8) agencés sur le tube de guidage (3, 3a, 3b) et/ou sur le support (10), lesquels sont arrangés de sorte à déterminer la position du support (10) dans le tube de guidage (3, 3a, 3b) et transmettre au dispositif de commande (1) les données de position déterminées.
